# EUROPEAN PATENT SPECIFICATION

(11) **EP 3 338 929 B1**
(45) Date of publication and mention of the grant of the patent: **16.06.2021**
(21) Application number: 16002720.7
(22) Date of filing: 22.12.2016
(51) Int. Cl.: B23C 5/10, B23C 5/20

(54) **CUTTING INSERT**
SCHNEIDEINSATZ
INSERT DE DÉCOUPE

(43) Date of publication of application: 27.06.2018
(73) Proprietor: Ceratizit Luxembourg Sàrl, 8232 Mamer (LU)
(72) Inventor: Kister, Fabien, F-57000 Metz (FR)
(74) Representative: Ciesla, Dirk

(56) References cited:
- EP-A1- 2 764 940
- WO-A1-2011/122676
- US-A1- 2008 187 403
- US-A1- 2013 121 775

## Description

The application is directed to an indexable double-sided milling cutting insert with the features of the preamble of claim 1, as well as a milling tool.

From WO2014161658 (A1) an indexable double-sided milling cutting insert is known, wherein a top and a surface each comprise a first seat surface region extending to a first support edge and a second seat surface region extending to a second support edge. The cutting insert according to WO2014161658 (A1) substantially has the shape of an irregular hexagon having four long sides and two short sides in top view onto the top surface.

EP2764940 (A1) shows a milling cutting insert wherein each of the flank faces is formed in the shape of a twisted face in which a flank angle with respect to the cutting edge gradually increases in a positive angle.

US2008187403 (A1) shows a single-sided insert, wherein in the transitional zone between the planar cutting edge 3 and secondary cutting edge a notch is formed as a cutting edge portion and acts as a guide.

Object of the present invention is to provide an improved indexable double-sided milling cutting insert. A further object is to provide a tool holder and an assembly of a tool holder and a cutting insert.

These objects are achieved by a milling cutting insert, a tool holder and an assembly with the features of the respective independent claims. Advantageous developments are specified in the dependent claims.

The cutting insert according to the present invention comprises:
- a top surface and a bottom surface,
- a through-bore coaxial to a first symmetry axis intersecting the top surface and the bottom surface,
- a median plane extending perpendicularly to the first symmetry axis and virtually dividing the cutting insert into two halves,
- two major side surfaces,
- two minor side surfaces,
- four main cutting edges formed at the respective transitions of the top surface and the bottom surface with the major side surfaces,
- four secondary cutting edges formed at the respective transitions of the top surface and the bottom surface with the minor side surfaces,
- two cutting corners on each of the top surface and the bottom surface, the cutting corners being formed between the main cutting edges and the secondary cutting edges, the cutting corners being arranged diagonally opposite with respect to the symmetry axis,
- two secondary corners on each of the top surface and the bottom surface,
- planar axial support surfaces formed on each of the minor side surfaces,
wherein - in a top view of the cutting insert - an axial support surface confines an interior angle < 90° with that major side surface, which is connected to that minor side surface that carries said axial support surface via a cutting corner, wherein adjacent to the axial support surface an inwardly curved recess is formed on the minor side surface, wherein the recess extends from the top surface to the bottom surface, wherein the top surface and the bottom surface each comprise a seat surface extending diagonally between the transitions of the axial support surfaces and the top surface and the bottom surface , respectively, wherein in that the axial support surface is inclined at an interior angle (β) > 90° with respect to the adjacent seat surface.

The cutting insert has four independent cutting edges. It is two-fold indexable, meaning that per side (top and bottom surface, respectively) two sets of cutting edges are arranged such that by rotating the insert by 180° a new pair of cutting edges is offered to a workpiece surface.
Further, it is double-sided, meaning that it can be used on both sides: in a first case the top surface acts as rake face, when flipping the insert, the bottom surface acts as rake face.
The cutting insert can be axially clamped in a seat by a fastening screw the threaded portion of which is passed through the through bore of the cutting insert and can be engaged with a corresponding threaded bore in the tool holder.

The median plane is a thought plane dividing the cutting insert into two halves.

The recess extends perpendicularly to the top side / bottom side respectively. In other words, the recess appears projecting in a top view of the cutting insert.

This recess increases the clearance in the radial direction (with respect to its mounting position on a tool holder) of the cutting corner and thus improves the ramping capability of the insert. Ramping means that the insert may not only be used for movements in a plane perpendicular to the rotational axis of the tool holder, but also - to a certain extent - can travel parallel to the rotational axis of the tool holder into a workpiece. Thus, the insert may be used to machine pockets.

The superior mounting helps to provide the stability needed for ramping applications, while the recess enables a maximum ramping capability.

It can be provided that the recesses have the shape of a circular arc when observed in a top view on the cutting insert.

Such rounded shape is beneficial to achieve maximum clearance with at the same time good mechanical properties.

Preferably the support surfaces have a ground surface. Alternatively the surfaces remain as sintered.

According to the invention, the top surface and the bottom surface each comprise a seat surface extending diagonally between the transitions of the axial support surfaces and the top surface and the bottom surface, respectively. In other words, the seat surfaces extend across the top and bottom side, respectively.

The seat surfaces preferably are planar and have a ground surface. Alternatively the surfaces remain as sintered.

The seat surfaces preferably are parallel to the median plane of the cutting insert. They define the deepest level of the top surface and the bottom surface, respectively (besides the through-bore, of course).

It can be provided that the axial support surface is formed as a facet on the minor side surface and is connected to a cutting corner by a corner surface, whereas the corner surface optionally is delimited from the axial support surface by a transitional surface. In other words, here the axial support surface is a partial surface of the minor side surface and delimited from the cutting corner by additional surfaces: in the first case by a corner surface alone, in the second case by a corner surface and a transitional surface.

In an alternative embodiment, no delimiting further surface is between the axial support surface and the cutting corner. Here, the axial support surface extends from the top surface to the bottom surface.

It shall be noted that in the oriented mounting position of the cutting insert in an insert receiving portion of a tool holder, the axial support surface which is opposite to the current active cutting corner is engaged with a corresponding contact surface in the insert receiving portion.
Further, the seat surface that is opposite to the current rake face of the cutting insert is in contact to the insert receiving portion in the oriented mounting position of the cutting insert.
Thirdly, that major side surface that is opposite of the current active cutting edge is in contact to the insert receiving portion in the oriented mounting position of the cutting insert.
"Active" cutting corner and cutting edge means the cutting corner cutting edge, respectively, that actually engages (or is intended to engage) with the material to be machined in the mounting position of the cutting insert.

According to the invention, the axial support surface is inclined at an angle β > 90° with respect to the adjacent seat surface. In other words, according to this preferred embodiment, the axial support surface is inclined towards the adjacent seat surface such that they confine an obtuse angle. When expressed in terms of the respective normal vectors, the normal vectors of the axial support surface and the adjacent seat surface confine an acute angle, as the angle between the normal vectors is the complementary angle (180-β). This configuration is particularly advantageous as a such inclined axial seat surface further improves the clamping stability of the cutting insert in a corresponding seat of a tool holder. Being such inclined it can transfer forces in tangential direction of the tool holder onto an accordingly formed contact surface of the tool holder, which is not the case for the perpendicular arrangement. Indeed, shouldering (shoulder milling) is the operation in milling generating the most radial forces, which are the source of risk of vibration if the insert is not correctly clamped.

It can be provided that - in top view of the cutting insert - the axial support surfaces establish an outer contour of the cutting insert.
"Establish an outer contour of the cutting insert" in other words means that the axial support surface is formed as a planar facet on a minor side surface, extending from the upper surface to the bottom surface. No material extends outwardly beyond the axial support surface in a top view. This has a particular advantage in ramping application, as more clearance is created behind (with respect to the trajectory of the cutting insert in operation) the axial support surface and the risk of damaging the cutting insert is reduced. Further, such insert is easy to manufacture and a corresponding insert receiving portion in a tool holder does not require undercuts that are difficult to machine.

It can be provided that the cutting corners are elevated with respect to the median plane such that the establish the highest points of the cutting insert, when observed in a side view. In other words, the top and bottom surfaces are not entirely flat, but the cutting corners protrude from the respective surfaces. This arrangement provides for particularly smooth cutting performance.

Preferably, the cutting corners are spaced from the median plane by a distance greater than a distance by which the secondary corners are spaced from the median plane. Here, the cutting corners project above the secondary corners. The secondary corners are formed between the main cutting edges and the transition of the axial support surfaces and the top surface or the bottom surface, respectively. In a top view of the insert, the secondary corners are observed as intersections of the main cutting edges the axial support surfaces.

It can be provided that the main cutting edges have a downward slope from the cutting corners to secondary corners. Preferably, the main cutting edges are straight lines when observed in a top view.

The main cutting edges may have a curvature when observed in a side view of the cutting insert. The may be concave or curved convexly.

Preferably, at the transition of a major side surface and a minor side surface adjacent to the cutting corner a corner surface is formed, and wherein said corner surface merges into a radial support surface via a transitional surface. For a smooth transition, the corner surface and the transitional surface have a rounded shape.

Preferably, the cutting insert has a generally rectangular shape in a top view.

The length of a projection of the major side surface thereby is for instance 1,3 to 10 times the length of a projection of the minor side surface, when projected parallel to the first symmetry axis. In a preferred embodiment, the projected length of the major cutting edge is roughly four times the projected length of the minor cutting edge.

Preferably the insert is adapted for shoulder milling.
According to a preferred embodiment the cutting insert is configured to achieve a 90-degree shoulder when applied to said shoulder milling operation.

Preferably, the cutting insert is adapted for radial mounting, that is, the top surface and the bottom surface, respectively, act as rake surfaces in an operational state of the cutting insert.

Preferably, the cutting insert is made of hard metal (cemented carbide) or a cermet via a powder-metallurgical route.

Protection is also sought for a milling tool comprising a tool holder provided with a plurality of insert receiving portions with indexable double-sided milling cutting inserts according to any one of the preceding claims mounted therein.

Preferably, the insert receiving portions are adapted such that active main cutting edges of cuttings inserts mounted in said insert receiving portions extend substantially parallel to a rotational axis of the tool holder.

In such manner, the cutting inserts can be used beneficially for creating 90° edges on a workpiece.

According to a preferred embodiment a contact surface in the insert receiving portions for accommodating the axial seat surface of a cutting insert is designed such that its angle with the rotational axis of the tool holder corresponds to the angle at which the axial seat surface is inclined to simultaneously engaged side surface.

Preferably, a contact surface in the insert receiving portions for accommodating the axial seat surface of a cutting insert is designed such that its angle with the tangential axis of the tool holder corresponds to the angle at which the axial seat surface is inclined to the adjacent seat surface.

The invention will now be described, by way of example, with reference to the accompanying drawings in which:
- Fig. 1: shows a perspective view of a cutting insert not according to the invention
- Fig. 2: a top view of the cutting insert of figure 1
- Fig. 3a-3b: views of cutting inserts according to the invention
- Fig. 4a: top view of a cutting insert not according to the invention
- Fig. 4b: top view of a cutting insert according to the embodiment of figure 3b
- Fig. 5a-5c: various views of a tool holder with cutting inserts
- Fig. 6: a tool holder without cutting inserts
- Fig. 7: detail of a tool holder with cutting insert

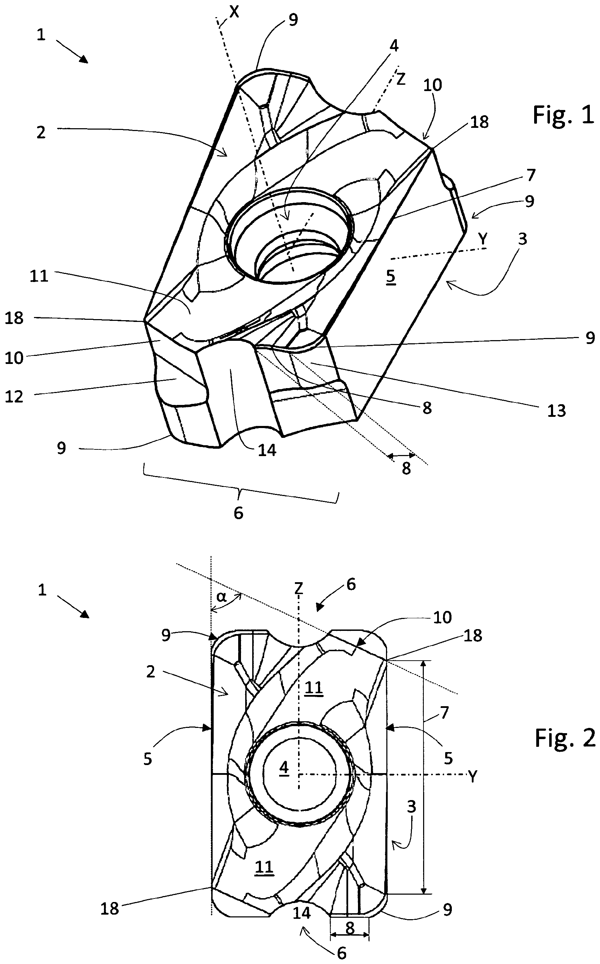

Figure 1 shows a perspective view on an indexable double-sided milling cutting insert 1.

The cutting insert 1 comprises a top surface 2, a bottom surface 3, and side surfaces 5, 6 The minor side surfaces 6 are structured in a plurality of partial surfaces that will be described in more detail later.

A through-bore 4 extends coaxially to a first symmetry axis X intersecting the top surface 2 and the bottom surface 3. A screw may be inserted in the through-bore 4 for fixation of the cutting insert in a tool holder (not shown here). Main cutting edges 7 are formed at the transition between the major side surfaces 5 and the top surface 2, and the bottom surface 3, respectively. Further, secondary cutting edges 8 are formed between sections of the minor side surfaces 6 and the top surface 2, and the bottom surface 3, respectively. At the transition between the main cutting edges 7 and the minor cutting edges 8 cutting corners 9 are formed. Secondary corners 18 are formed by the intersection of the main cutting edges 7 and that edge which is formed at the transition of axial support surfaces 10 with the top surface 2, and the bottom surface 3, respectively. The main cutting edges 7 extend between the cutting corners 9 and the secondary corners 18. Thus, the cutting insert 1 possesses four cutting corners 9 and four secondary corners 18. Cutting corners 9 and secondary corners 18 are arranged diagonally with respect to the top side 2 and the bottom side 3, respectively.

The cutting insert 1 possesses rotational symmetry with respect to a rotation by 180 degrees around the first symmetry axis X. A rotation of the cutting insert 1 along the symmetry axis X by 180 degrees results in the same configuration as prior to the rotation. This rotation corresponds to a so-called indexing of the cutting insert 1.

The cutting insert 1 further has rotational symmetry with respect to a rotation by 180 degrees around the second symmetry axis Y. In other words, a rotation along the second symmetry axis Y or the third symmetry axis Z by 180 degrees results in the same configuration as prior to the rotation. Thus, the insert is double-sided.
From this it becomes clear that despite of the notation "top surface" and "bottom surface" a top surface may also be situated at a lower position than a bottom surface and vice versa.
It should be noted that slight deviations from an exact symmetry are possible, e.g. through markings on surfaces indicating different indexing positions.

A main cutting edge 7, the cutting corner 9 adjacent thereto and the secondary cutting edge 8 adjacent to the latter together form a cutting edge portion which can individually be used in a machining operation.
Thus, four independent pairs of main and secondary cutting edges are present in the embodiment of an indexable double sided cutting insert 1.

In an operational state of the cutting insert 1, a main cutting edge 7 defines a shoulder in a work piece (not shown), while the corresponding secondary cutting edge 8 acts as wiper edge creating a smooth workpiece surface. Preferably the cutting edges 7, 8 are arranged such that an essentially 90-degree shoulder is formed on the workpiece.

The cutting corners 9 are elevated with respect to top surface 2 and bottom surface 3, respectively, such that the establish the highest points of the cutting insert 1, when observed in a side view. In other words, the top and bottom surfaces 2, 3 are not entirely flat, but the cutting corners 9 protrude from the respective surfaces. This feature results in a smooth peeling cutting performance.
Adjacent to the cutting corners 9, curved corner surfaces 13 are formed on the minor side surfaces 6. Said corner surface 13 merges into an axial support surface 10 via a transitional surface 12.

On each of the minor side surfaces 6 an inwardly curved recess 14 is formed. This recess 14 increases the clearance in the radially inwards (with respect to a mounting position) direction of the cutting corner and thus improves the ramping capability of the insert. Ramping means that the cutting insert 1 may not only be used for movements in a plane perpendicular to a rotational axis of the tool holder, but also - to a certain extent - can travel parallel to the rotational axis of the tool holder into a workpiece. Thus, the cutting insert 1 may be used to machine pockets.
Preferably the recesses 14 have the shape of a circular arc when observed in a top view on the cutting insert 1.
From a manufacturing point of view, the recess 14 preferably extends from the top surface 2 to the bottom surface 3.
The recess 14 divides the minor side surface 6 into two halves. When observed along the third symmetry axis Z, there is each an axial support surface 10 right and left to the recess 14.
In a mounting position of the cutting insert 1 that axial support surface 10 is engaged with a corresponding contact surface of a tool holder, the transition to the upper surface 2 of which is adjacent to the presently active major cutting edge 7. When assuming the present view of figure 1 to be a mounting position, the upper right axial support surface 10 would be the actually engaged axial support surface 10. Correspondingly, the upper right major cutting edge 7 would be the active major cutting edge 7, and clockwise adjacent to it the active cutting corner 9 and the active minor cutting edge 8.

Each axial support surface 10 confines an interior angle α < 90° in a top view of the cutting insert 1 with the major side surface 5 being delimited from said axial support surface 10 by a recess 14, which will be explained in more detail by figure 2.

Figure 2 shows a top view of the cutting insert 1 of figure 1, viewed from above, perpendicular on the top surface 2, that is, along the first symmetry axis X.
The cutting insert 1 has a generally rectangular shape with its length (resulting through orthogonal projection of the cutting insert along the second symmetry axis Y) being longer than its width (resulting through orthogonal projection along the third symmetry axis Z). As an example, the length of the cutting insert 1 could be 1.4 to 1.8 times greater than its width. A particular preferred aspect ratio is around 1.6.

In terms of lengths of the main cutting edge 7 and the secondary cutting edge 8, the main cutting edge 7 is two to ten times longer than the secondary cutting edge 8, in the present example approximately five times longer. The lengths of the cutting edge 7 and the secondary cutting edge 8, respectively, are indicated by dimension arrowheads.

In its mounting position in a tool holder 16 (not shown here) the cutting insert 1 is positioned by an axial support surface 10, a seat surface 11 and a side surface 5.
The axial support surface 10 secures the cutting insert 1 against a shift in axial direction of the tool holder 16 (corresponding to a direction parallel to the third symmetry axis Z), preferably also against a shift in tangential direction of the tool holder 16 (corresponding to a direction parallel to the first symmetry axis X of the cutting insert 1).
The seat surface 11 secures the cutting insert 1 against a shift in tangential direction of the tool holder 16, corresponding to a direction parallel to the first symmetry axis X of the cutting insert 1.
The side surface 5 secures the cutting insert 1 against a shift in radial direction of the tool holder 16, corresponding to a direction parallel to the second symmetry axis Y of the cutting insert 1.
When assuming the present view of figure 2 to represent a mounting position of the cutting insert 1, the cutting insert 1 would be positioned and secured by the axial support surface 10 and side surface 5 between which the angle α is drawn, and by the seat surface 11 on the bottom side 3 of the cutting insert.

As can be seen from the figure, the axial support surface 10 confines an interior angle α < 90° in a top view of the cutting insert 1 with that major side surface 5, which is connected to that minor side surface 6 that carries the axial support surface 11 via a cutting corner 9. In other words, the major side surface 5 chosen to define the angle α is not the major side surface 5 adjacent to the respective axial support surface 10, but the one opposite to it.
In yet another alternative definition of the angle α, said angle α is measured between an axial support surface 10 and that major side surface 5, that is delimited from said axial support surface 10 by an inwardly curved recess 14.

This arrangement with an interior angle α < 90° has the particular advantage that upon placing the cutting insert 1 in a corresponding insert receiving portion of a tool holder, a self-locking effect is achieved. The cutting insert 1 is secured against a shift both in axial and radial direction of the tool holder. The superior mounting helps to provide the stability needed for ramping applications, while the recess 14 enables a maximum ramping capability.

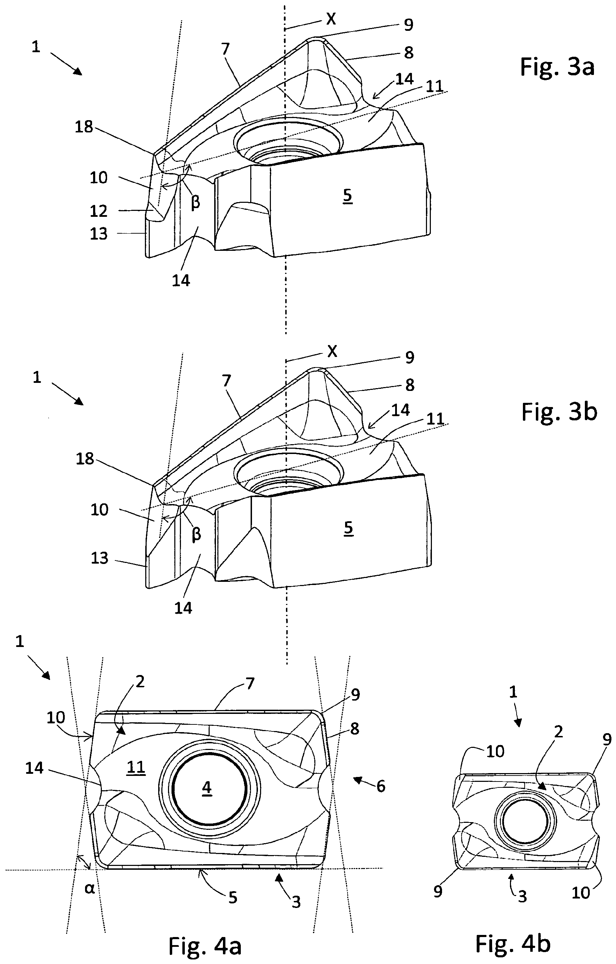

Figures 3a and 3b show cutting inserts according to the invention.

Figure 3a shows that the axial support surface 10 is inclined at an angle β > 90 degrees to the seat surface 11.

In other words, the axial support surface 10 is inclined towards the adjacent seat surface 11 such that they confine an obtuse angle. When expressed in terms of the respective normal vectors, the normal vectors of the axial support surface 10 and the adjacent seat surface 11 confine an acute interior angle, as the angle between the normal vectors is the complementary angle (180-β).

This configuration is particularly advantageous as a such inclined axial seat surface 10 further improves the clamping stability of the cutting insert 1 in a corresponding seat of a tool holder 16 (not shown here). Being such inclined it can transfer tangential (with respect to its trajectory) forces onto an accordingly formed contact surface of the tool holder 16, which is not the case for a perpendicular arrangement. Indeed, shouldering (shoulder milling) is the operation in milling generating the most radial forces, which are the source of vibrations if the insert is not correctly clamped.

In the example of figure 3a, adjacent to the axial support surface 10 a rounded transitional surface 12 is formed which forms the transition to the corner surface 13.

The embodiment of figure 3b differs from figure 3a in that no such radius, or rounded transitional surface 12 is formed between the axial support surface 10 and the corner surface 13.

Figure 4a shows a cutting insert 1 not according to the invention. In this example, no transitional surface 12 and no corner surface 13 is formed. Instead, the axial support surfaces 10 extend from the top surface 2 to the bottom surface.

In the present example the axial support surfaces 10 are inclined at an angle β is 90 degrees with respect to the seat surface 11. Thus, the axial support surfaces 10 appear projecting as a line in a top view. The axial support surfaces 10 extend from the top surface 2 to the bottom surface.

As in previous embodiments, the axial support surfaces 10 are inclined at the angle α < 90° towards the respective major side surfaces 5.

It can be provided in an alternative (not shown), that the axial support surfaces 10 are inclined at an angle β > 90 degrees with respect to the seat surface 11. The axial support surfaces 10 extend from the top surface 2 to the bottom surface.

In the present embodiment, the axial support surfaces 10 establish the outer contour of the cutting insert. No material extends outwardly beyond the axial support surfaces 10 when observed in a top view on the insert.

This has a particular advantage in ramping application, as more clearance is created behind (with respect to the trajectory of the cutting insert in operation) the axial support surface 10 and the risk of damaging the cutting insert is reduced.

The design with axial support surfaces 10 extending from the top surface 2 to the bottom surface 3 is easy to manufacture via a powder metallurgical route. In particular, when the axial support surfaces 10 are inclined at an angle β is 90 degrees with respect to the seat surface 11 / top surface 2 as shown in figure 4a.

Figure 4b shows a top view of the cutting insert 1 of figure 3b.

No radius, or rounded transitional surface 12 is formed between the axial support surface 10 and the corner surface 13. In consequence, in the present top view of the cutting insert 1, the axial support surfaces 10 are at the outer contour or envelope of the cutting insert 1.

For all embodiments discussed in the foregoing, it is particularly beneficial to have a flat, i.e. planar axial support surface 10. In this way, in combination with a likewise flat corresponding support surface in an insert receiving portion (seat, pocket) of a tool holder, an even distribution of axial forces is ensured. A risk of wear as it can be expected for line contacts or point contacts is reduced.

With respect to manufacturing and handling it is beneficial that the axial support surfaces 10 are arranged at the envelope of the cutting insert, that is, not in form of undercuts.

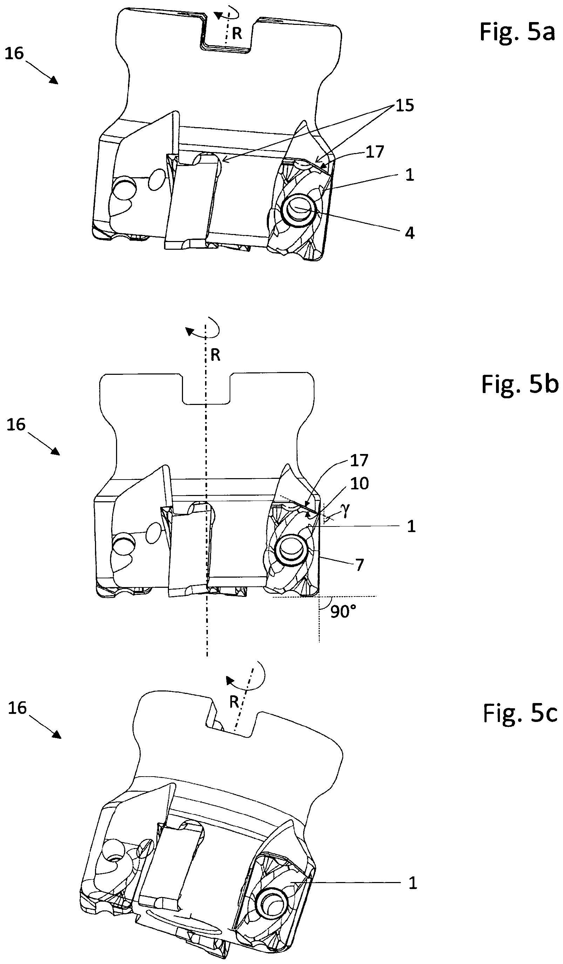

Figures 5a through 5c show different views of cutting inserts 1 mounted in insert receiving portions 15 of a tool holder 16. For sake of clarity and to avoid unnecessary repetition, not all reference numerals are shown in every of the figures 5a through 5c.
In the present case of figures 5a through 5c, four cutting inserts 1 are mounted on the tool holder 16. It can be provided, of course, that a tool holder 16 is designed to accommodate more or less than said four cutting inserts 1.

In figure 5b a rotational axis R is shown along which the tool holder 16 rotates in its operational state, i.e. during a machining operation. In addition to the rotation along the rotational axis R the tool holder 16 moves perpendicular to the rotational axis R (corresponding to the feed). Further, it may move parallel the rotational axis R, i.e. in a ramping mode.

The insert receiving portions or pockets 15 are designed such that they can accommodate cutting inserts 1 according to the invention via contact surfaces forming counterparts to the respective support surfaces of the cutting insert 1, that is, counterparts to an axial support surface 10, a seat surface 11 and a side surface 5.

Preferably, a contact surface 17 in the insert receiving portions 15 for accommodating the axial seat surface 10 of a cutting insert 1 is designed such that its angle γ with the rotational axis R of the tool holder 16 corresponds to the angle α at which the axial seat surface 10 is inclined to the corresponding major side surface 5. This feature is seen best in figure 5b: the contact surface 17 in the insert receiving portion 15 of the tool holder 16 is inclined towards the rotational axis R of the tool holder 16 at an angle γ (shown by dashed auxiliary lines). The angle γ of the contact surface 17 corresponds to the angle α at which the axial seat surface 10 is inclined and explained for the cutting insert 1 in the foregoing figure 2. This has the particular advantage that upon placing the cutting insert 1 in a corresponding seat 15 of a tool holder 16, a self-locking effect is achieved. The cutting insert 1 is secured against an radial (outwards) shift in the seat 15.
The arrangement of the inclined contact surface 17 and the axial seat surface 10 ensures stable mounting of the cutting insert 1 in the insert receiving portion 15.

Preferably the insert receiving portions 15 are adapted such that active main cutting edges 7 of cuttings inserts 1 mounted in said insert receiving portions 15 extend substantially parallel to the rotational axis R of the tool holder 16. "Active" here means that said cutting edges 7 engage (or are intended to engage) with a material to be machined.
Thereby it is achieved that a machining operation results in a 90-degree shoulder on a workpiece. This preferred configuration is shown in figure 5b by dashed auxiliary lines.
A cutting insert 1 according to the present embodiment is particularly suitable for shoulder milling operations creating a 90-degree shoulder on a workpiece.

Figure 5c shows an alternative view of the tool holder 16 with mounted cutting inserts 1. In the present embodiment four cutting inserts 1 are arranged on the according tool holder 16.
The tool holder 16 preferably is made of steel. Alternatively, it could be made of a tungsten heavy metal alloy or hard metal.

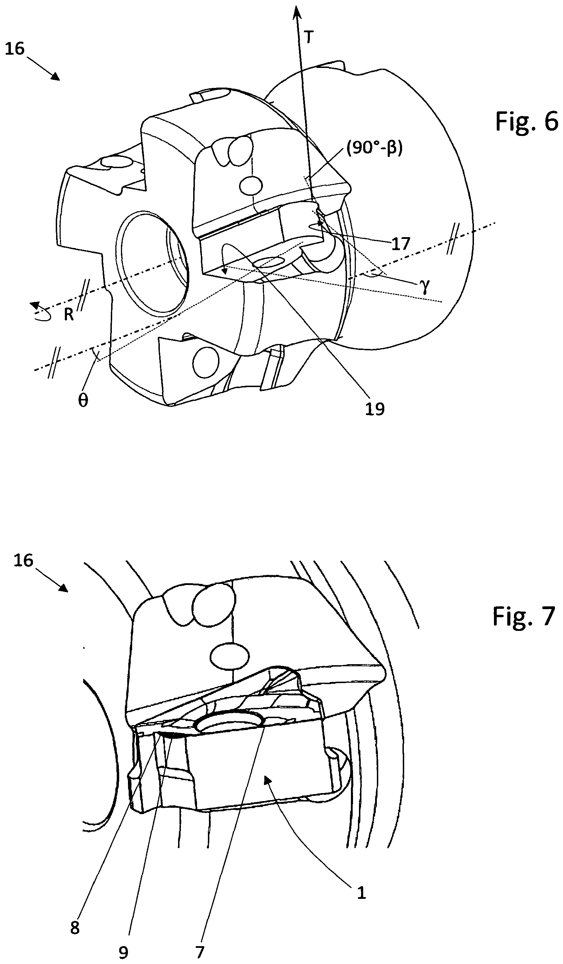

Figure 6 shows a tool holder 16 of the invention according to a preferred embodiment. The tool holder 16 is shown without cutting inserts 1.

The tool holder 16 has four insert receiving portions 15. A seat support surface 19 on the base of the insert receiving portions 15 is adapted to support a seat surface 11 of a cutting insert 1. The seat support surface 19 preferably is inclined towards the rotational axis R of the tool holder 16 at an angle θ (resulting in the incident cutting angle of the cutting insert mounted in the pocket) through which the cutting insert is tilted with respect to a workpiece surface thus creating a clearance angle for the secondary cutting edge 8 (and the workpiece) of the cutting insert to be mounted in the insert receiving portion 15.
Further this angle changes the intrusion of the main cutting edge 7 in a material to be machined. An angle θ larger than zero leads to smoother cutting performance of the cutting edge 7.
Further, a contact surface 17 in the insert receiving portions 15 for accommodating the axial seat surface 10 of a cutting insert 1 is designed such that its angle γ with the rotational axis R of the tool holder 16 corresponds to the angle α at which the axial seat surface 10 is inclined to the corresponding major side surface 5. Further, the contact surface 17 can be inclined towards a tangential direction T of the tool holder 16 at an angle (90-β) such that is ideally accommodates a cutting insert 1 with an axial support surface 10 inclined with β. An axial support surface 10 being inclined at an angle β being larger than 90° can transfer forces onto the contact surface 17 in tangential direction also.

Figure 7 shows a detailed view of a cutting insert 1 positioned in a tool holder 16 in its mounting position for performing a milling operation. The active cutting edges here are the main cutting edge 7 and the secondary cutting edge 8. In-between there is the active cutting corner 9.

### Reference numerals:

- 1: Cutting insert
- 2: top surface
- 3: bottom surface
- 4: through-bore
- 5: major side surface
- 6: minor side surface
- 7: main cutting edge
- 8: secondary cutting edge
- 9: cutting corner
- 10: axial support surface
- 11: seat surface
- 12: transition surface
- 13: curved corner surface
- 14: recess
- 15: insert receiving portion
- 16: tool holder
- 17: contact surface
- 18: secondary corner
- 19: seat support surface

## Claims

1. An indexable double-sided milling cutting insert (1), the milling cutting insert (1) comprising:
- a top surface (2) and a bottom surface (3),
- a through-bore (4) coaxial to a first symmetry axis (X) intersecting the top surface (2) and the bottom surface (3),
- a median plane (YZ) extending perpendicularly to the first symmetry axis (X) and virtually dividing the cutting insert (1) into two halves,
- two major side surfaces (5),
- two minor side surfaces (6),
- four main cutting edges (7) formed at the respective transitions of the top surface (2) and the bottom surface (3) with the major side surfaces (5),
- four secondary cutting edges (8) formed at the respective transitions of the top surface (2) and the bottom surface (3) with the minor side surfaces (6),
- two cutting corners (9) on each of the top surface (2) and the bottom surface (3), the cutting corners (9) being formed between the main cutting edges (7) and the secondary cutting edges (8), the cutting corners (9) being arranged diagonally opposite with respect to the symmetry axis (X),
- two secondary corners (18) on each of the top surface (2) and the bottom surface (3),
- planar axial support surfaces (10) formed on each of the minor side surfaces (6),
wherein in a top view of the cutting insert (1) - an axial support surface (10) confines an interior angle (α) < 90° with that major side surface (5), which is connected to that minor side surface (6) that carries said axial support surface (10), via a cutting corner (9), wherein adjacent to the axial support surface (10) an inwardly curved recess (14) is formed on the minor side surfaces (6), wherein the recess (14) extends from the top surface (2) to the bottom surface (3), wherein the top surface (2) and the bottom surface (3) each comprise a seat surface (11) extending diagonally between the transitions of the axial support surfaces (10) and the top surface (2) and the bottom surface (3), respectively, **characterized in that** the axial support surface (10) is inclined at an interior angle (β) > 90° with respect to the adjacent seat surface (11).

2. The cutting insert (1) according to claim 1, wherein the axial support surface (10) is formed as a facet on a minor side surface (6) and is connected to a cutting corner (9) by a corner surface (13), whereas the corner surface (13) optionally is delimited from the axial support surface (10) by a transitional surface (12).

3. The cutting insert (1) according to claim 1 or 2, wherein the axial support surface (10) is formed as a facet on a minor side surface (6) extending from the top surface (2) to the bottom surface (3).

4. The cutting insert (1) according to any of the preceding claims, wherein in top view of the cutting insert (1) the axial support surface (10) establish the outer contour of the cutting insert (1).

5. The cutting insert (1) according to any of the preceding claims, wherein the main cutting edges (7) have a downward slope from the cutting corners (9) to secondary corners (18), said secondary corners (18) being formed between the main cutting edges (7) and the transition of the axial support surfaces (10) and the top surface (2) or the bottom surface (3), respectively.

6. The cutting insert (1) according to any of the preceding claims, wherein at the transition of a major side surface (5) and a minor side surface (6) adjacent to the cutting corner (9) a corner surface (13) is formed, and wherein said corner surface (13) merges into an axial support surface (10) via a transitional surface (12).

7. A milling tool comprising:
a tool holder (16) provided with a plurality of insert receiving portions (15) with a plurality of indexable double-sided milling cutting inserts (1) according to any one of the claims 1 through 6 mounted to said insert receiving portions (15).

8. A milling tool according to claim 7, wherein the insert receiving portions (15) are adapted such that active main cutting edges (7) of cuttings inserts (1) mounted in said insert receiving portions (15) extend substantially parallel to a rotational axis (R) of the tool holder (16).

9. A milling tool according to claim 7 or 8, wherein a contact surface (17) in the insert receiving portions (15) for accommodating the axial seat surface (10) of a cutting insert (1) is designed such that its angle (γ) with the rotational axis (R) of the tool holder (16) corresponds to the angle (α) at which the axial seat surface (10) is inclined to the corresponding major side surface (5).

10. A milling tool according to claim any of the claims 7 through 9, wherein a seat support surface (19) in the insert receiving portions (15) for accommodating a seat surface (11) of a cutting insert (1) is designed such that its angle (θ) with the rotational axis (R) of the tool holder (16) is in the range of >0 degrees and <20 degrees.

## Patentansprüche

1. Ein indexierbarer doppelseitiger Frässchneideinsatz (1), wobei der Frässchneideinsatz (1) aufweist:
- eine obere Fläche (2) und eine untere Fläche (3),
- eine Durchgangsbohrung (4) koaxial zu einer ersten Symmetrieachse (X), die die obere Fläche (2) und die untere Fläche (3) schneidet;
- eine Mittelebene (YZ), die sich senkrecht zu der ersten Symmetrieachse (X) erstreckt und den Schneideinsatz (1) virtuell in zwei Hälften teilt;
- zwei Hauptseitenflächen (5),
- zwei Nebenseitenflächen (6),
- vier Hauptschneidkanten (7), die an den jeweiligen Übergängen von der oberen Fläche (2) und der unteren Fläche (3) mit den Hauptseitenflächen (5) ausgebildet sind,
- vier sekundäre Schneidkanten (8), die an den jeweiligen Übergängen von der oberen Fläche (2) und der unteren Fläche (3) mit den Nebenseitenflächen (6) ausgebildet sind;
- zwei Schneidecken (9) an jeder der oberen Flächen (2) und der unteren Fläche (3), wobei die Schneidecken (9) zwischen den Hauptschneidkanten (7) und den sekundären Schneidkanten (8) ausgebildet sind, die Schneidecken (9) sind diagonal gegenüberliegend bezüglich der Symmetrieachse (X) angeordnet,
- zwei sekundäre Ecken (18) an jeder der oberen Fläche (2) und der unteren Fläche (3);
ebene axiale Stützflächen (10), die auf jeder der Nebenseitenflächen (6) ausgebildet sind,
wobei in einer Draufsicht auf den Schneideinsatz (1) - eine axiale Stützfläche (10) einen Innenwinkel (α) < 90° mit der Hauptseitenfläche (5) begrenzt, die mit der Nebenseitenfläche (6) verbunden ist, die die axiale Stützfläche (10) über eine Schneidecke (9) trägt, wobei benachbart zu der axialen Stützfläche (10) eine nach innen gekrümmte Aussparung (14) auf den Nebenseitenflächen (6) ausgebildet ist,
wobei sich die Aussparung (14) von der oberen Fläche (2) zu der unteren Fläche (3) erstreckt, wobei die obere Fläche (2) und die untere Fläche (3) jeweils eine Sitzfläche (11) aufweisen, die sich diagonal zwischen den Übergängen der axialen Stützflächen (10) und der oberen Fläche (2) bzw. die unteren Fläche (3) erstreckt, **dadurch gekennzeichnet, dass** die axiale Stützfläche (10) unter einem Innenwinkel (β) > 90 ° zu der benachbarten Sitzfläche (11) geneigt ist.

2. Schneideinsatz (1) nach Anspruch 1, wobei die axiale Stützfläche (10) als Facette auf einer Nebenseitenfläche (6) ausgebildet ist und durch eine Eckfläche (13) mit einer Schneidecke (9) verbunden ist, wohingegen die Eckfläche (13) optional von der axialen Stützfläche (10) durch eine Übergangsfläche (12) begrenzt ist.

3. Schneideinsatz (1) nach Anspruch 1 oder 2, wobei die axiale Stützfläche (10) als Facette auf einer Nebenseitenfläche (6) ausgebildet ist, die sich von der oberen Fläche (2) zu der unteren Fläche (3) erstreckt.

4. Schneideinsatz (1) nach einem der vorhergehenden Ansprüche, wobei in einer Draufsicht auf den Schneideinsatz (1) die axiale Stützfläche (10) die Außenkontur des Schneideinsatzes (1) festlegt.

5. Schneideinsatz (1) nach einem der vorhergehenden Ansprüche, wobei die Hauptschneidkanten (7) eine Abwärtsneigung von den Schneidecken (9) zu den sekundären Ecken (18) aufweisen, wobei die besagten sekundären Ecken (18) zwischen den Hauptschneidkanten (7) und dem Übergang der axialen Stützflächen (10) und der oberen Fläche (2) bzw. der unteren Fläche (3) ausgebildet sind.

6. Schneideinsatz (1) nach einem der vorhergehenden Ansprüche, wobei bei dem Übergang von einer Hauptseitenfläche (5) und einer Nebenseitenfläche (6) benachbart zu der Schneidecke (9) eine Eckfläche (13) ausgebildet ist und wobei die besagte Eckfläche (13) durch eine Übergangsfläche (12) in eine axiale Stützfläche (10) übergeht.

7. Ein Fräswerkzeug, aufweisend:
einen Werkzeughalter (16), der mit einer Mehrzahl von Einsatzaufnahmeabschnitten (15) mit einer Mehrzahl von indizierbaren doppelseitigen Frässchneideinsätzen (1) nach einem der Ansprüche 1 bis 6 versehen ist, die an den Einsatzaufnahmeabschnitten (15) befestigt ist.

8. Fräswerkzeug nach Anspruch 7, wobei die Einsatzaufnahmeabschnitte (15) so angepasst sind, dass sich die aktiven Hauptschneidkanten (7) der in den Einsatzaufnahmeabschnitten (15) befestigten Schneideinsätze (1) im Wesentlichen parallel zu einer Rotationsachse (R) des Werkzeughalters (16) erstrecken.

9. Fräswerkzeug nach Anspruch 7 oder 8, wobei eine Kontaktfläche (17) in den Einsatzaufnahmeabschnitten (15) zum Aufnehmen der axialen Sitzfläche (10) eines Schneideinsatzes (1) so ausgelegt ist, dass ihr Winkel (γ) mit der Drehachse (R) des Werkzeughalters (16) dem Winkel (α) entspricht, unter dem die axiale Sitzfläche (10) zu der entsprechenden Hauptseitenfläche (5) geneigt ist.

10. Fräswerkzeug nach einem der Ansprüche 7 bis 9, wobei eine Sitzstützfläche (19) in den Einsatzaufnahmeabschnitten (15) zur Aufnahme einer Sitzfläche (11) eines Schneideinsatzes (1) so ausgelegt ist, dass ihr Winkel (γ) mit der Drehachse (R) des Werkzeughalters (16) im Bereich von >0 Grad und <20 Grad liegt.

## Revendications

1. Plaquette de coupe pour fraisage double face indexable (1), la plaquette de coupe pour fraisage (1) comprenant :
- une surface de dessus (2) et une surface de dessous (3),
- un alésage traversant (4) coaxial avec un premier axe de symétrie (X) coupant la surface de dessus (2) et la surface de dessous (3),
- un plan médian (YZ) s'étendant perpendiculairement au premier axe de symétrie (X) et divisant virtuellement la plaquette de coupe (1) en deux moitiés,
- deux grandes surfaces latérales (5),
- deux petites surfaces latérales (6),
- quatre arêtes de coupe principales (7) formées au niveau des transitions respectives de la surface de dessus (2) et de la surface de dessous (3) avec les grandes surfaces latérales (5),
- quatre arêtes de coupe secondaires (8) formées au niveau des transitions respectives de la surface de dessus (2) et de la surface de dessous (3) avec les petites surfaces latérales (6),
- deux coins de coupe (9) sur chacune de la surface de dessus (2) et de la surface de dessous (3), les coins de coupe (9) étant formés entre les arêtes de coupe principales (7) et les arêtes de coupe secondaires (8), les coins de coupe (9) étant agencés de façon diagonalement opposée par rapport à l'axe de symétrie (X),
- deux coins secondaires (18) sur chacune de la surface de dessus (2) et de la surface de dessous (3),
- des surfaces de support axiales planes (10) formées sur chacune des petites surfaces latérales (6),
en vue de dessus de la plaquette de coupe (1) - une surface de support axiale (10) confinant un angle intérieur (α) < 90° avec la grande surface latérale (5) qui est reliée à la petite surface latérale (6) qui porte ladite surface de support axiale (10), par le biais d'un coin de coupe (9) ; en position adjacente à la surface de support axiale (10), un renfoncement incurvé vers l'intérieur (14) étant formé sur les petites surfaces latérales (6) ; le renfoncement (14) s'étendant depuis la surface de dessus (2) jusqu'à la surface de dessous (3) ; la surface de dessus (2) et la surface de dessous (3) comprenant chacune une surface d'assise (11) s'étendant diagonalement entre les transitions des surfaces de support axiales (10) et la surface de dessus (2) et la surface de dessous (3), respectivement ; **caractérisée en ce que** la surface de support axiale (10) est inclinée selon un angle intérieur (β) > 90° par rapport à la surface d'assise adjacente (11).

2. Plaquette de coupe (1) selon la revendication 1, dans laquelle la surface de support axiale (10) prend la forme d'une facette sur une petite surface latérale (6) et est reliée à un coin de coupe (9) par une surface de coin (13), la surface de coin (13) étant éventuellement délimitée par rapport à la surface de support axiale (10) par une surface de transition (12).

3. Plaquette de coupe (1) selon la revendication 1 ou 2, dans laquelle la surface de support axiale (10) prend la forme d'une facette sur une petite surface latérale (6) s'étendant depuis la surface de dessus (2) jusqu'à la surface de dessous (3).

4. Plaquette de coupe (1) selon l'une quelconque des revendications précédentes, dans laquelle, en vue de dessus de la plaquette de coupe (1), la surface de support axiale (10) établissent le contour extérieur de la plaquette de coupe (1).

5. Plaquette de coupe (1) selon l'une quelconque des revendications précédentes, dans laquelle les arêtes de coupe principales (7) présentent une pente descendante depuis les coins de coupe (9) jusqu'à des coins secondaires (18), lesdits coins secondaires (18) étant formés entre les arêtes de coupe principales (7) et la transition des surfaces de support axiales (10) et la surface de dessus (2) ou la surface de dessous (3), respectivement.

6. Plaquette de coupe (1) selon l'une quelconque des revendications précédentes, dans laquelle une surface de coin (13) est formée au niveau de la transition d'une grande surface latérale (5) et d'une petite surface latérale (6) adjacente au coin de coupe (9), et dans laquelle ladite surface de coin (13) se fond en une surface de support axiale (10) par le biais d'une surface de transition (12).

7. Outil de fraisage, comprenant:
un porte-outil (16) pourvu d'une pluralité de parties réceptrices de plaquette (15), une pluralité de plaquettes de coupe pour fraisage double face indexables (1) selon l'une quelconque des revendications 1 à 6 étant montées sur lesdites parties réceptrices de plaquette (15).

8. Outil de fraisage selon la revendication 7, dans lequel les parties réceptrices de plaquette (15) sont adaptées de manière à ce que des arêtes de coupe principales actives (7) de plaquettes de coupe (1) montées dans lesdites parties réceptrices de plaquette (15) s'étendent sensiblement parallèlement à un axe de rotation (R) du porte-outil (16).

9. Outil de fraisage selon la revendication 7 ou 8, dans lequel une surface de contact (17) dans les parties réceptrices de plaquette (15) destinée à accueillir la surface d'assise axiale (10) d'une plaquette de coupe (1) est conçue de telle sorte que son angle (γ) avec l'axe de rotation (R) du porte-outil (16) corresponde à l'angle (α) d'inclinaison de la surface d'assise axiale (10) par rapport à la grande surface latérale correspondante (5).

10. Outil de fraisage selon l'une quelconque des revendications 7 à 9, dans lequel une surface de support d'assise (19) dans les parties réceptrices de plaquette (15) destinée à accueillir une surface d'assise (11) d'une plaquette de coupe (1) est conçue de telle sorte que son angle (θ) avec l'axe de rotation (R) du porte-outil (16) s'inscrive dans l'intervalle >0 degré et <20 degrés.
